# EUROPEAN PATENT APPLICATION

(11) **EP 1 387 545 A2**
(43) Date of publication of application: **04.02.2004**
(21) Application number: 03254465.2
(22) Date of filing: 16.07.2003
(51) Int. Cl.: H04L 27/26

(54) **Multicarrier transmission with adaptation to channel characteristics**

(30) Priority: 29.07.2002 KR 2002044630
(71) Applicant: SAMSUNG ELECTRONICS CO., LTD., Suwon-City, Kyungki-do (KR)
(72) Inventor: Hwang, Chan-soo, Kiheung-eub, Yongin-city Kyungki-do (KR); Kim, Yung-soo 109-2401 Kachi Maeul, Seongnam-city Kyungki-do (KR)
(74) Representative: Ertl, Nicholas Justin

(57) **Abstract**

An orthogonal frequency division multiplexing (OFDM) communication method and apparatus adapted to channel characteristics are provided. The OFDM communication method includes changing at least one of a length of a transmission symbol, a format of a frame, and a format of the transmission symbol depending on a type of the transmission symbol and a radius of a cell, in which communication is performed. The OFDM communication apparatus includes a symbol inspector, for inspecting a type of a transmission symbol and outputting the result of the inspection as a first control signal, and a symbol and format converter, for changing at least one of a length of a transmission symbol, a format of a frame, and a format of the transmission symbol in response to the first control signal and a radius of a cell, in which communication is performed.

## Description

The present invention relates to orthogonal frequency division multiplexing (OFDM) communication, and more particularly, to an OFDM communication method and apparatus adapted to channel characteristics.

With a variety of environments in which a communication method is used, the communication method is required to be effective even if Doppler frequency or delay spread changes. However, since an optimum physical layer varies with channel change speed and delay spread, it is difficult to efficiently support a communication method using a single physical layer. Accordingly, a hierarchical cell including a variety of cells is used in a single communication method.

When using such a hierarchical cell, channels for users corresponding to different layers have different characteristics. For example, when a cell has a large radius, delay spread is long, and a channel change speed is fast. Accordingly, if the same modulation method is applied to different layers, a communication method cannot be adapted to the channel characteristics. In order to overcome this problem, a conventional communication method uses OFDM when the channel change speed is slow and uses code division multiple access (CDMA) when the channel change speed is fast. As described above, when using the conventional communication method, two modems of different types need to be provided for a terminal. Accordingly, the conventional communication method increases the complexity of transmitter and receiver of a terminal. In addition, since signals having different spectrum characteristics are used, the conventional communication method is difficult to develop, and radio resource management such as handover and association is difficult.

According to an aspect of the present invention, there is provided an OFDM communication method adapted to channel characteristics, including changing at least one of a length of a transmission symbol, a format of a frame, and a format of the transmission symbol depending on a type of the transmission symbol and a radius of a cell, in which communication is performed.

The invention thus provides an orthogonal frequency division multiplexing (OFDM) communication method through which at least one of the length of a transmission symbol, the format of a transmission symbol, and the format of a frame is changed to adapt to channel characteristics such as channel change speed and channel spread.

According to another aspect of the present invention, there is provided an OFDM communication apparatus adapted to channel characteristics, including a symbol inspector, which inspects a type of a transmission symbol and outputs the result of the inspection as a first control signal; and a symbol and format converter, which changes at least one of a length of a transmission symbol, a format of a frame, and a format of the transmission symbol in response to the first control signal and a radius of a cell, in which communication is performed.

The invention thus also provides an OFDM communication apparatus for performing the OFDM communication method of the invention, which is adapted to the channel characteristics.

The above and other features and advantages of the present invention will become more apparent by describing in detail preferred embodiments thereof with reference to the attached drawings in which:
FIG. 1 is a flowchart of an orthogonal frequency division multiplexing (OFDM) communication method adapted to channel characteristics according to a first embodiment of the present invention;
FIG. 2 is a diagram showing an example of a single frame including symbols having various lengths;
FIG. 3 is a flowchart of an OFDM communication method adapted to channel characteristics according to a second embodiment of the present invention;
FIG. 4 is a diagram showing an example of a macro format;
FIG. 5 is a diagram showing an example of a micro format;
FIG. 6 is a diagram showing an example of a pico format;
FIG. 7 is a flowchart of an embodiment of step 16 shown in FIG. 1 according to the present invention;
FIG. 8 is a diagram showing a hierarchical cell structure;
FIG. 9 is a diagram showing an example of a usual multiplex carrier wave transmission symbol;
FIG. 10 is a diagram showing another example of a usual multiplex carrier wave transmission symbol;
FIG. 11 is a diagram showing still another example of a usual multiplex carrier wave transmission symbol;
FIG. 12 is a block diagram of an OFDM communication apparatus for performing an OFDM communication method of the present invention, according to an embodiment of the present invention;
FIG. 13 is a block diagram of an embodiment of a symbol and format converter shown in FIG. 12;
FIG. 14 is a block diagram of another embodiment of the symbol and format converter shown in FIG. 12;
FIG. 15 is a block diagram of a first converter shown in FIG. 13;
FIG. 16 is a graph showing changes in a bit error rate with respect to changes in Doppler frequency; and
FIG. 17 is a graph showing changes in a bit error rate with respect to changes in the number of carrier waves.

Hereinafter, preferred embodiments of an orthogonal frequency division multiplexing (OFDM) communication method to adapt to channel characteristics according to the present invention will be described in detail with reference to the attached drawings. In an OFDM communication method to adapt to channel characteristics according to the present invention, at least one of the length of a transmission symbol, the format of a frame, and the format of a transmission symbol is changed depending on a type of transmission symbol and the radius of a cell, in which communication is performed.

Channel variation is usually measured in terms of Doppler frequency multiplied by the length of an OFDM symbol, denoted as fdTs (fd: Doppler frequency in Hz, Ts; symbol duration in seconds). When fdTs is less than 0.01, the effect of channel variation on the detection performance is negligible. However, when fdTs becomes greater than 0.01, the effect becomes noticeable. Generally speaking, a fast channel change speed is when fdTs is greater than 0.01, though this is not a hard and fast rule.

Likewise, the channel length is measured by the delay spread of a channel, which is the time delay incurred from when the first signal components arrive at the receiver to when the last signal components arrive at the receiver. For example, if the last signal arrives at the receiver 0.01 seconds after the first signal arrived at the receiver, the length of the channel is 0.01 seconds. A long, medium or short channel is a relative measure utilized in the industry to describe this relative channel length. For example, if the default symbol length is 0.1 msec, a 0.1-msec channel is considered to be a long channel, a 0.01-msec channel is considered to be a medium channel, and a 0.001-msec is considered to be a short channel. In other words, when the length of a channel, divided by the length of the default OFDM symbol, is more than 10%, it is considered to be a long channel.

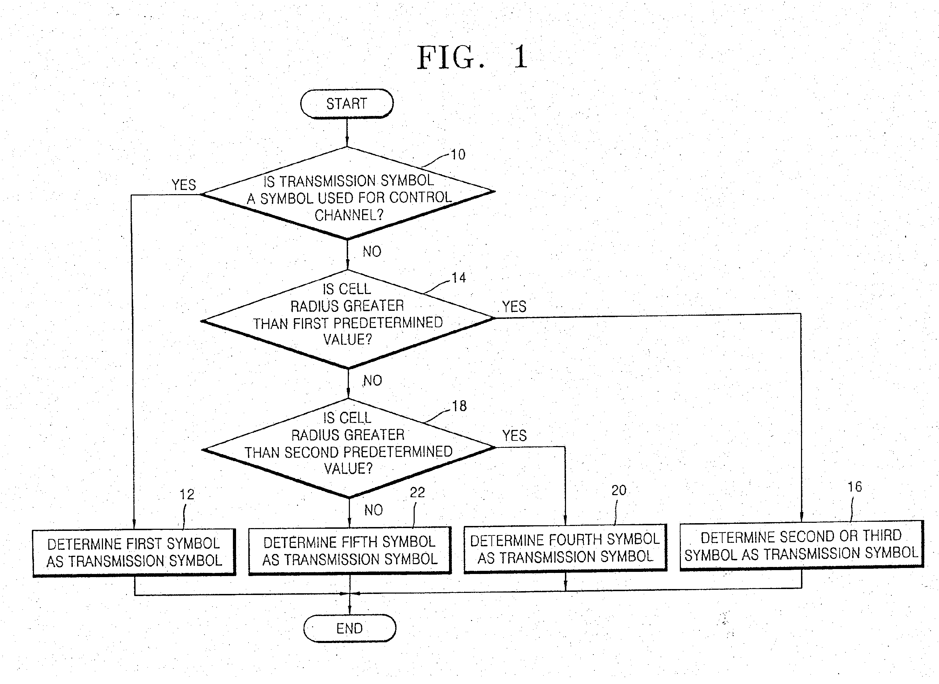

FIG. 1 is a flowchart of an OFDM communication method to adapt to channel characteristics according to a first embodiment of the present invention. The OFDM communication method according to the first embodiment includes determining the length of a transmission symbol depending on a type of transmission symbol and a cell radius (steps 10 through 22).

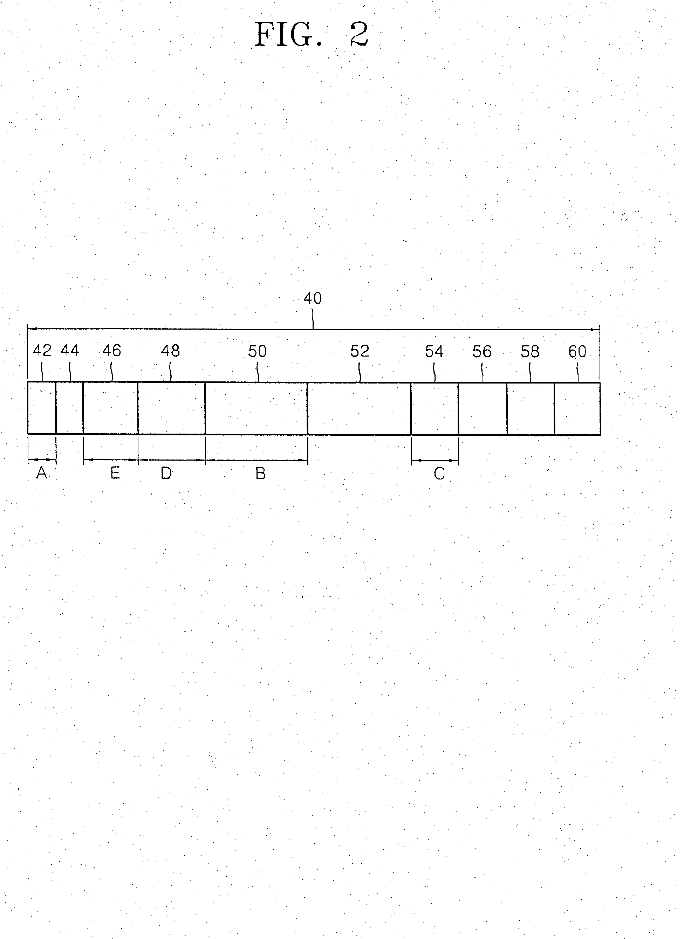

FIG. 2 is a diagram showing an example of a single frame 40, in which symbols having various lengths are mixed. The single frame 40 includes first symbols 42 and 44, second symbols 50 and 52, third symbols 54, 56, 58, and 60, a fourth symbol 48, and a fifth symbol 46.

In the OFDM communication method according to the first embodiment of the present invention shown in FIG. 1, the length of a transmission symbol is changed depending on a type of transmission symbol and the radius of a cell, in which communication is performed.

More specifically, it is determined whether a transmission symbol is a symbol that is used for a control channel in step 10. If it is determined that the transmission symbol is the symbol that is used for the control channel, the first symbol 42 or 44 shown in FIG. 2 is determined as the transmission symbol in step 12. The first symbol 42 or 44 contains control information and has a length A. In other words, if it is determined that the transmission symbol is the symbol that is used for the control channel, the length of the transmission symbol is set to A. As described above, when a large amount of data is not necessary or when it is necessary to finely divide time, as in random access or control, the relatively short length A is determined as the length of a transmission symbol.

If it is determined that the transmission symbol is not the symbol that is used for the control channel, it is determined whether a cell radius is greater than a first predetermined value in step 14. If it is determined that the cell radius is greater than the first predetermined value, the second symbol 50 or 52 or the third symbol 54, 56, 58, or 60 shown in FIG. 2 is determined as the transmission symbol in step 16. The second symbol 50 or 52 has a length B and is suitable to channel characteristics, in which a channel change speed is slow and the length of a channel is long. The third symbol 54, 56, 58, or 60 has a length C and is suitable to channel characteristics, in which a channel change speed is fast and the length of a channel is long or short. In other words, if it is determined that the cell radius is greater than the first predetermined value, the length of the transmission symbol is set to B or C.

However, if it is determined that the cell radius is not greater than the first predetermined value, it is determined whether the cell radius is greater than a second predetermined value in step 18. Here, the second predetermined value is less than the first predetermined value. If it is determined that the cell radius is greater than the second predetermined value, the fourth symbol 48 shown in FIG. 2 is determined as the transmission symbol in step 20. The fourth symbol 48 has a length D and is suitable to channel characteristics, in which a channel change speed and the length of a channel are medium. In other words, if it is determined that the cell radius is not greater than the first predetermined value but greater than the second predetermined value, the length of the transmission symbol is set to D.

However, if it is determined that the cell radius is not greater than the second predetermined value, the fifth symbol 46 shown in FIG. 2 is determined as the transmission symbol in step 22. The fifth symbol 46 has a length E and is suitable to channel characteristics, in which a channel change speed is slow and the length of a channel is short. In other words, if it is determined that the cell radius is not greater than the second predetermined value, the length of the transmission symbol is set to E.

According to the present invention, the length D of the fourth symbol 48 is shorter than the length B of the second symbol 50, and each of the lengths A, C, and E of the respective first, third, and fifth symbols 42, 54, and 46 is shorter than the length D of the fourth symbol 48. In addition, according to the present invention, each of the lengths B, C, D, and E of the respective second, third, fourth, and fifth symbols 50, 54, 48, and 46 may be an integer multiple of the length A of the first symbol 42, and each of the lengths B, C, and D of the respective second, third, and fourth symbols 50, 54, and 48 may be an integer multiple of the length E of the fifth symbol 46.

In order to change the length of a transmission symbol, as shown in FIG. 1, the present invention changes the number of carrier waves while fixing an entire signal bandwidth. The entire signal bandwidth indicates the result of dividing an interval between carrier waves by the length of a transmission symbol. For example, when increasing the number of carrier waves while fixing an entire signal bandwidth, a distance between carrier waves is long and the length of a transmission symbol increases. Conversely, when decreasing the number of carrier waves while fixing an entire signal bandwidth, a distance between carrier waves is short and the length of a transmission symbol decreases. As described above, the length of a transmission symbol can be changed by adjusting the number of carrier waves, in step 12, 16, 20 or 22.

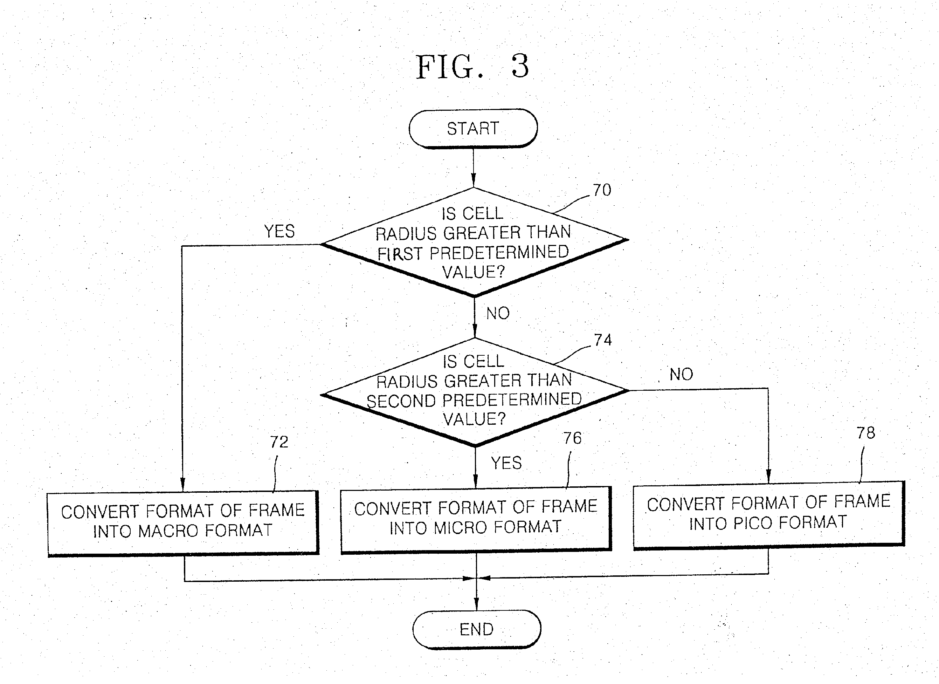

FIG. 3 is a flowchart of an OFDM communication method to adapt to channel characteristics according to a second embodiment of the present invention. The OFDM communication method includes converting the format of a frame depending on a cell radius in steps 70 through 78.

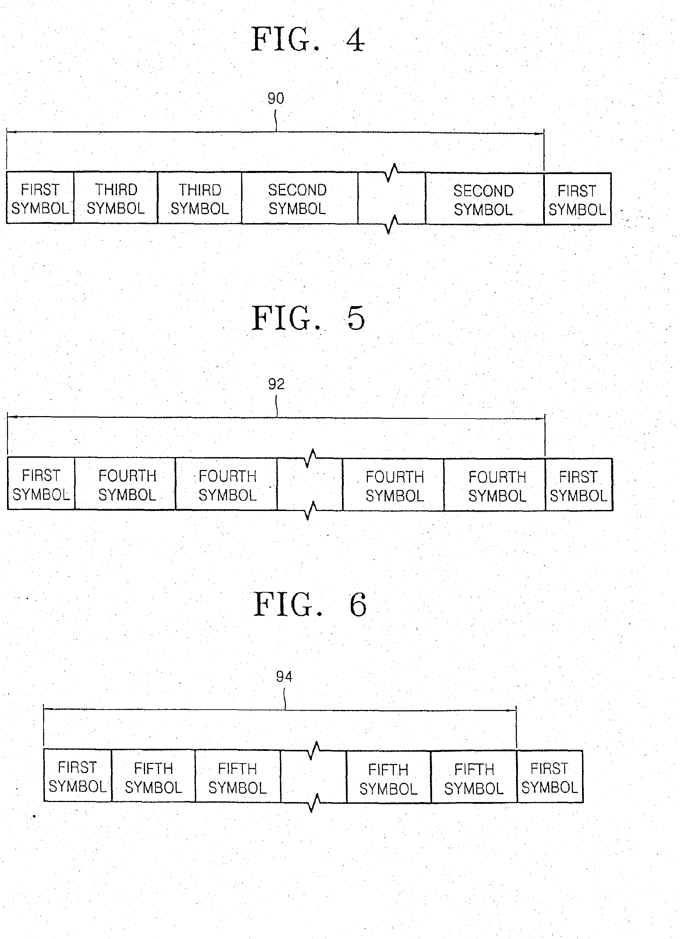

FIG. 4 is a diagram showing an example of a macro format. A single frame 90 is composed of a single first symbol and a plurality of second symbols, and a plurality of third symbols.

FIG. 5 is a diagram showing an example of a micro format. A single frame 92 is composed of a single first symbol and a plurality of fourth symbols.

FIG. 6 is a diagram showing an example of a pico format. A single frame 94 is composed of a single first symbol and a plurality of fifth symbols.

In the OFDM communication method according to the second embodiment of the present invention shown in FIG. 3, the format of a frame is converted depending on the radius of a cell, in which communication is performed.

For this operation, it is determined weather a cell radius is greater than a first predetermined value in step 70. If it is determined that the cell radius is greater than the first predetermined value, the format of a frame is converted into a macro format, as shown in FIG. 4, in step 72. Referring to FIG. 4, the macro format is composed of a single first symbol, a plurality of second symbols, and a plurality of third symbols. In other words, when a channel change speed is fast or slow and the length of a channel is long due to a large cell radius, the format of the frame is converted into the macro format shown in FIG. 4.

However, if it is determined that the cell radius is not greater than the first predetermined value, it is determined weather the cell radius is greater than a second predetermined value in step 74. The second predetermined value is smaller than the first predetermined value. If it is determined that the cell radius is greater than the second predetermined value, the format of a frame is converted into a micro format, as shown in FIG. 5, in step 76. Referring to FIG. 5, the micro format is composed of a single first symbol and a plurality of fourth symbols. In other words, when a channel change speed and the length of a channel are medium, the format of the frame is converted into the micro format.

However, if it is determined that the cell radius is not greater than the second predetermined value, the format of a frame is converted into a pico format, as shown in FIG. 6, in step 78. Referring to FIG. 6, the pico format is composed of a single first symbol and a plurality of fifth symbols. In other words, when a channel change speed is slow and the length of a channel is short due to a small cell radius, the format of the frame is converted into the pico format.

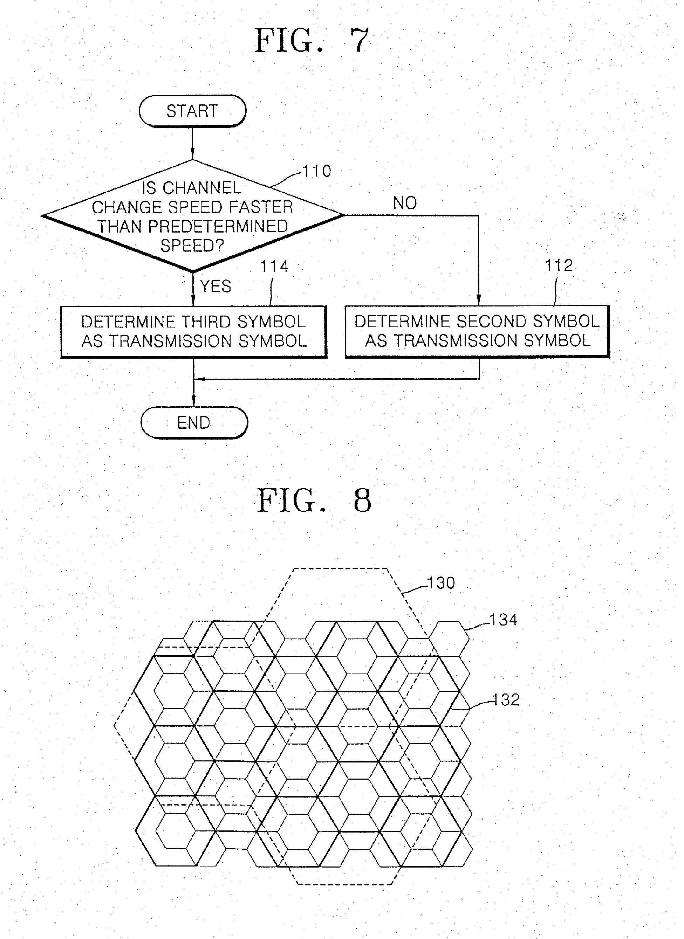

FIG. 7 is a flowchart of an embodiment of step 16 shown in FIG. 1 according to the present invention. The embodiment of step 16 includes determining a second or third symbol as a transmission symbol depending on a channel change speed in steps 110 through 114.

Referring to FIG. 7, if it is determined that the cell radius is greater than the first predetermined value (step 14 of FIG. 1), it is determined whether a channel change speed is greater than a predetermined speed in step 110.

If it is determined that the channel change speed is not greater than the predetermined speed, the second symbol 50 shown in FIG. 2 is determined as the transmission symbol in step 112. In other words, the length of the transmission symbol is set to B. However, if it is determined that the channel change speed is greater than the predetermined speed, the third symbol 54 is determined as the transmission symbol in step 114. In other words, the length of the transmission symbol is set to C.

According to a third embodiment of the present invention, the length of a transmission symbol and the format of a frame are changed depending on a type of transmission symbol and a cell radius. For this operation, referring to FIG. 1, if it is determined that the cell radius is greater than the first predetermined value, the second or third symbol is determined as the transmission symbol, and simultaneously the format of the frame is converted into the macro format shown in FIG. 4, in step 16. However, if it is determined that the cell radius is not greater than the first predetermined value but is greater than the second predetermined value, the fourth symbol is determined as the transmission symbol, and simultaneously the format of the frame is converted into the micro format shown in FIG. 5, in step 20. In addition, if it is determined that the cell radius is not greater than the second predetermined value, the fifth symbol is determined as the transmission symbol, and simultaneously the format of the frame is converted into the pico format shown in FIG. 6, in step 22.

FIG. 8 is a diagram showing a hierarchical cell structure, which is composed of macro cells 130, micro cells 132, and pico cells 134.

Referring to FIG. 8, the macro cells 130 represented by dotted lines correspond to cells having a radius that is greater than the first predetermined value. The micro cells 132 represented by bold sold lines correspond to cells having a radius that is not greater than the first predetermined value but greater than the second predetermined value. The pico cells 134 represented by thin solid lines correspond to cells having a radius that is not greater than the second predetermined value. The hierarchical cell structure shown in FIG. 8 is used in order to increase frequency efficiency when frequency resources are limited. As shown in FIG. 8, a plurality of micro cells 132 exist within each macro cell 130, and a plurality of pico cells 134 exist within each micro cell 132. Usually, the hierarchical cell structure is designed such that users with a fast channel change speed are gathered at the macro cells 130 and users with a slow channel change speed are gathered in the micro cells 132 or the pico cells 134. This is disclosed in pages 301-304 of a book entitled "Radio Resource Management for Wireless Networks", written by Jens Zander and Seong-Lyun Kim, and published by Artech Houser in 2001.

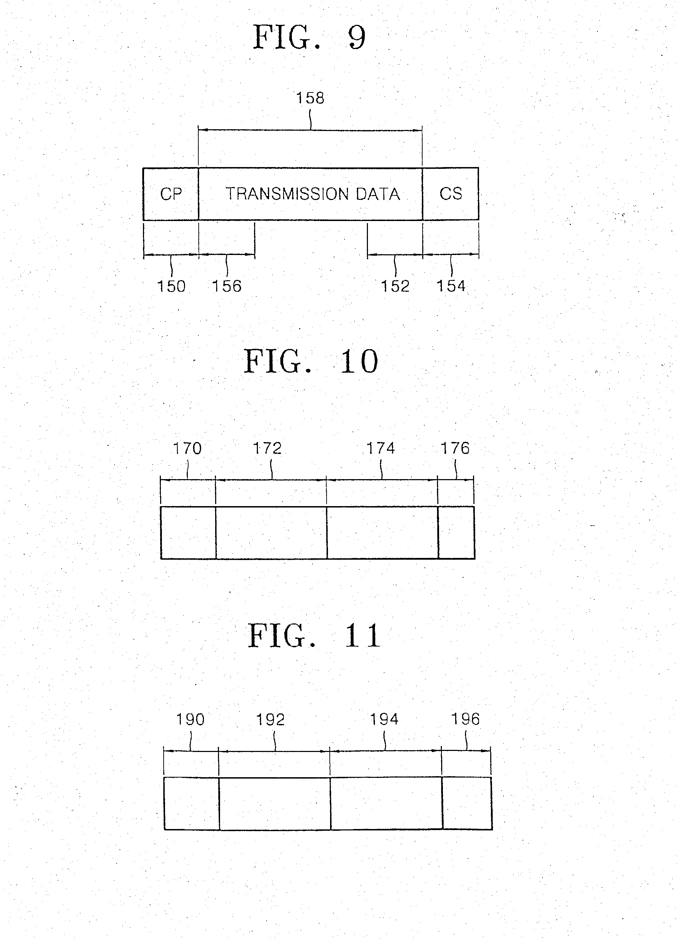

FIG.s 9 to 11 show examples of the multiplex carrier wave transmission symbol. FIG. 9 is an example of the second symbol and FIG.s 10 and 11 are different examples of the third symbol. In the following description, the different parts of the symbols of different examples are each given different names to avoid confusion. Therefore, the existence of a "third cyclic prefix" (for example) in a symbol should not be understood as requiring a "first" or "second" cyclic prefix in that symbol.

FIG. 9 is a diagram showing an example of a multiplex carrier wave transmission symbol. In this example, the transmission symbol is composed of a first cyclic prefix (CP) 150, a first transmission signal 158, and a first cyclic suffix (CS) 154.

According to the fourth embodiment of the present invention, the format of a symbol as well as the length of the symbol can be changed depending on a cell radius and a channel change speed.

For example, if it is determined that the channel change speed is not greater than the predetermined speed, the second symbol is determined as the transmission symbol and the format of the second symbol is converted into a format shown in FIG. 9 in step 112 of FIG. 7. In FIG. 9, the first CP 150 of the transmission symbol is the result of copying an end portion 152 of the first transmission signal 158 to the front of the first transmission signal 158 and is used to eliminate the interference of a previous symbol. The first CS 154 of the transmission symbol is the result of copying a beginning portion 156 of the first transmission signal 158 to the back of the first transmission signal 158 and is used to mitigate the alignment condition of transmission time when a carrier wave is divided and used by multiple users usually in an upward channel. Here, the first transmission signal 158 contains transmission data. As described above, since the end portion 152 of the transmission data 158 is copied to the first CP 150 and the beginning portion 156 of the transmission data 158 is copied to the first CS 154, the transmission symbol shown in FIG. 9 has a cyclic structure.

FIG. 10 is a diagram showing another example of a multiplex carrier wave transmission symbol. In this example, the transmission symbol is composed of a second CP 170, second and third transmission signals 172 and 174, and a second CS 176.

FIG. 11 is a diagram showing still another example of a multiplex carrier wave transmission symbol. In this example, the transmission symbol is composed of a third CP 190, fourth and fifth transmission signals 192 and 194, and a third CS 196.

However, if it is determined that the channel change speed is greater than the predetermined speed, the third symbol is determined as the transmission symbol and the format of the third symbol is converted into a format shown in FIG. 10 or 11 in step 114 of FIG. 7.

According to the present invention, the second CP 170 of the third symbol shown in FIG. 10 includes the end portion of transmission data stored in each of the second and third transmission signals 172 and 174 and the beginning portion of the transmission data. In other words, the second CP 170 is composed of two first CPs 150 and one first CS 154 shown in FIG. 9. In addition, each of the second and third transmission signals 172 and 174 shown in FIG. 10 contains the same transmission data as that contained in the first transmission signal 158 shown in FIG. 9. Unlike the transmission symbol shown in FIG. 9, the transmission symbol shown in FIG. 10 includes repeated transmission data following the second CP 170. Here, the second CS 176 includes the beginning portion of the transmission data. In other words, the second CS 176 is composed of one first CS 154 shown in FIG. 9.

According to the present invention, the third CP 190 of the third symbol shown in FIG. 11 includes the end portions of transmission data stored in each of the fourth and fifth transmission signals 192 and 194. In other words, the third CP 190 is composed of only two first CPs 150. In addition, each of the fourth and fifth transmission signals 192 and 194 shown in FIG. 11 contains the same transmission data as that contained in the first transmission signal 158 shown in FIG. 9. Unlike the transmission symbol shown in FIG. 9, the transmission symbol shown in FIG. 11 includes repeated transmission data following the third CP 190. Here, the third CS 196 includes the beginning portions of the transmission data. In other words, the third CS 196 is composed of two first CSs 154 shown in FIG. 9. The transmission symbol shown in FIG. 11 can be used when timing does not agree well as a whole as in random access.

Consequently, in an OFDM communication method, the length of the first CP 150 is required to be longer than a channel length. However, since duplicate information is contained in the first CP 150, communication efficiency is decreased when the result of dividing the length of the first CP 150 by the transmission data contained in the first transmission signal 158 is too large. Accordingly, in order to maintain the communication efficiency, the length of the transmission data needs to be 5-10 times longer than the length of the first CP 150. In other words, in the transmission symbol, the length of the first CP 150 needs to be as short as possible. Here, if the length of the transmission symbol is long in a state in which a channel change speed is fast, a channel may change within the transmission data, and thus communication performance may be degraded. As described above, it is necessary to increase the length of the first CP 150 as a channel length increases, but there is a limitation in increasing the length of the first CP 150. In order to solve this problem, an OFDM communication method according to the present invention described above adaptively changes the length of a transmission symbol depending on a channel change speed and a cell radius, as shown in FIG. 1. As described above, influence of inter symbol interference (ISI) can be overcome while the degree of overhead due to the first CP 150 is fixed, by adaptively changing the length of a transmission symbol.

Hereinafter, the structure and operation of an OFDM communication apparatus adapted to channel characteristics according to the present invention, which performs the above-described OFDM communication method adapted to channel characteristics according to the present invention, will be described with reference to the attached drawings.

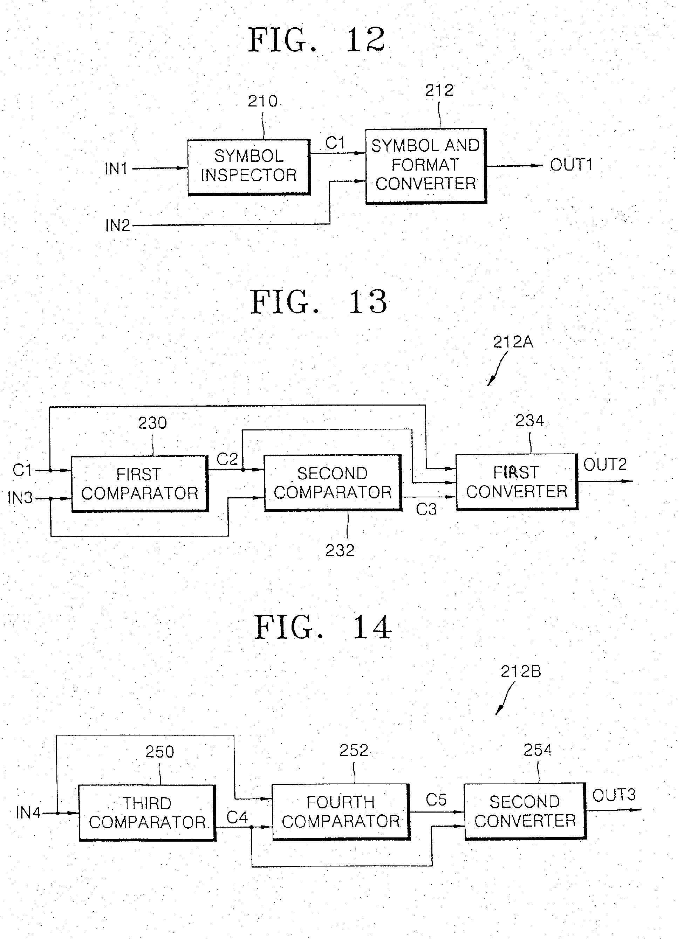

FIG. 12 is a block diagram of an OFDM communication apparatus for performing the above-described OFDM communication method according to an embodiment of the present invention. The OFDM communication apparatus includes a symbol inspector 210 and a symbol and format converter 212.

Referring to FIG. 12, in order to perform step 10 shown in FIG. 1, the symbol inspector 210 inspects the type of a transmission symbol that is input through an input terminal IN1 and outputs the result of the inspection to the symbol and format converter 212 as a first control signal C1. For example, the symbol inspector 210 inspects whether the transmission symbol input through the input terminal IN1 is a symbol used for a control channel and outputs the result of the inspection as the first control signal C1.

In order to perform steps 12 through 22 shown in FIG. 1, the symbol and format converter 212 changes at least one of the length of the transmission symbol, the format of a frame, and the format of the transmission symbol in response to a cell radius that is input through an input terminal IN2 and the first control signal C1 received from the symbol inspector 210, and outputs the result of the change through an output terminal OUT1. Here, what will be changed among the length of the transmission symbol, the format of a frame, and the format of the transmission symbol is predetermined.

The following description concerns the structures and operations of embodiments of the symbol and format converter 212 shown in FIG. 12 according to the present invention. FIG.s 13 and 14 each show an example of the converter 212. In the following description, the different parts of the converter in the two examples are each given different names to avoid confusion. Therefore, the existence of a "third comparator" (for example) in the converter should not be understood as requiring a "first" or "second" comparator in that converter.

FIG. 13 is a block diagram of an embodiment 212A of the symbol and format converter 212 shown in FIG. 12. The embodiment 212A includes a first comparator 230, a second comparator 232, and a first converter 234.

In order to perform step 14 shown in FIG. 1, the first comparator 230 of the symbol and format converter 212A shown in FIG. 13 compares the cell radius that is input through an input terminal IN3 with a first predetermined value in response to the first control signal C1 that is input from the symbol inspector 210 and outputs the result of the comparison to the second comparator 232 and the first converter 234 as a second control signal C2. In other words, when it is recognized based on the first control signal C1 received from the symbol inspector 210 that the transmission symbol is not a symbol used for a control channel, the first comparator 230 compares the cell radius with the first predetermined value. Here, the first predetermined value may be set in the first comparator 230 in advance, as shown in FIG. 13, or may be externally input, unlike the structure shown in FIG. 13.

In order to perform step 18 shown in FIG. 1, the second comparator 232 compares the cell radius with a second predetermined value in response to the second control signal C2 received from the first comparator 230 and outputs the result of the comparison to the first converter 234 as a third control signal C3. For example, when it is recognized based on the second control signal C2 received from the first comparator 230 that the cell radius is not greater than the first predetermined value, the second comparator 232 compares the cell radius with the second predetermined value and outputs the result of the comparison as the third control signal C3. Here, the second predetermined value may be set in the second comparator 232 in advance, as shown in FIG. 13, or may be externally input, unlike the structure shown in FIG. 13.

In order to perform steps 12, 16, 20, and 22 shown in FIG. 1, the first converter 234 determines one among first through fifth symbols as the transmission symbol in response to the first control signal C1 received from the symbol inspector 210, the second control signal C2 received from the first comparator 230, and the third control signal C3 received from the second comparator 232 and outputs the determined symbol through an output terminal OUT2. For example, in order to perform step 12, when it is recognized based on the first control signal C1 received from the symbol inspector 210 that the transmission symbol is a symbol used for a control channel, the first converter 234 determines the length of the transmission symbol as A. However, in order to perform step 16, when it is recognized based on the first and second control signals C1 and C2 that the transmission symbol is not a symbol used for a control channel and the cell radius is greater than the first predetermined value, the first converter 234 determines the length of the transmission symbol as B or C. In addition, in order to perform step 20, when it is recognized based on the first, second, and third control signals C1, C2 and C3 that the transmission symbol is not a symbol used for a control channel and the cell radius is not greater than the first predetermined value but is greater than the second predetermined value, the first converter 234 determines the length of the transmission symbol as D. In order to perform step 22, when it is recognized based on the first, second, and third control signals C1, C2 and C3 that the transmission symbol is not a symbol used for a control channel and the cell radius is not greater than the first predetermined value and is not greater than the second predetermined value, the first converter 234 determines the length of the transmission symbol as E.

FIG. 14 is a block diagram of another embodiment 212B of the symbol and format converter 212 shown in FIG. 12. The embodiment 212B includes a third comparator 250, a fourth comparator 252, and a second converter 254.

The symbol and format converter 212B shown in FIG. 14 performs the OFDM communication method shown in FIG. 3. In order to perform step 70 shown in FIG. 3, the third comparator 250 of the symbol and format converter 212B shown in FIG. 14 compares the cell radius that is input through an input terminal IN4 with the first predetermined value and outputs the result of the comparison to the fourth comparator 252 and the second converter 254 as a fourth control signal C4. Here, the first predetermined value may be set in the third comparator 250 in advance, as shown in FIG. 14, or may be externally input, unlike the structure shown in FIG. 14.

In order to perform step 74 shown in FIG. 3, the fourth comparator 252 compares the cell radius input through the input terminal IN4 with the second predetermined value in response to the fourth control signal C4 received from the third comparator 250 and outputs the result of the comparison to the second converter 254 as a fifth control signal C5. For example, when it is recognized based on the fourth control signal C4 received from the third comparator 250 that the cell radius is not grater than the first predetermined value, the fourth comparator 252 compares the cell radius with the second predetermined value and outputs the result of the comparison as the fifth control signal C5.

In order to perform steps 72, 76, and 78 of FIG. 3, the second converter 254 converts the format of a frame into a macro format, micro format, or pico format in response to the fourth control signal C4 received from the third comparator 250 and the fifth control signal C5 received from the fourth comparator 252 and outputs the frame having the converted format through an output terminal OUT3. For example, in order to perform step 72, when it is recognized based on the fourth control signal C4 that the cell radius is grater than the first predetermined value, the second converter 254 converts the format of a frame into the macro format shown in FIG. 4. In order to perform step 76, when it is recognized based on the fourth and fifth control signals C4 and C5 that the cell radius is not grater than the first predetermined value but is greater than the second predetermined value, the second converter 254 converts the format of a frame into the micro format shown in FIG. 5. In order to perform step 78, when it is recognized based on the fourth and fifth control signals C4 and C5 that the cell radius is less than both first and second predetermined values, the second converter 254 converts the format of a frame into the pico format shown in FIG. 6.

According to an embodiment of the present invention, the symbol and format converter 212 shown in FIG. 12 may be provided with the symbol and format converter 212A shown in FIG. 13 in order to perform steps 12 through 22 shown in FIG. 1 and the symbol and format converter 212B shown in FIG. 14 in order to perform the OFDM communication method shown in FIG. 3.

According to another embodiment of the present invention, the symbol and format converter 212 shown in FIG. 12 may be provided with only the symbol and format converter 212A shown in FIG. 13 in order to perform steps 12 through 22 shown in FIG. 1 and the OFDM communication method shown in FIG. 3. In this situation, the symbol and format converter 212A shown in FIG. 13 can perform all of the steps 12 through 22 shown in FIG. 1 and the OFDM communication method shown in FIG. 3. For example, the first and second comparators 230 and 232 perform steps 14 and 18, respectively, shown in FIG. 1 and also perform steps 70 and 74, respectively, shown in FIG. 3. The first converter 234 performs steps 12, 16, 20, 22, 72, 76, and 78. In other words, the first converter 234 converts the format of a frame into a macro, micro, or pico format in response to the second and third control signals C2 and C3 respectively received from the first and second comparators 230 and 232 and outputs the frame having the converted format through the output terminal OUT2. For example, in order to perform step 72, when it is recognized based on the second control signal C2 that the cell radius is greater than the first predetermined value, the first converter 234 converts the format of a frame into the macro format shown in FIG. 4. In order to perform step 76, when it is recognized based on the second and third control signals C2 and C3 that the cell radius is not greater than the first predetermined value but is greater than the second predetermined value, the first converter 234 converts the format of a frame into the micro format shown in FIG. 5. In order to perform step 78, when it is recognized based on the second and third control signals C2 and C3 that the cell radius is not greater than both first and second predetermined values, the first converter 234 converts the format of a frame into the pico format shown in FIG. 6.

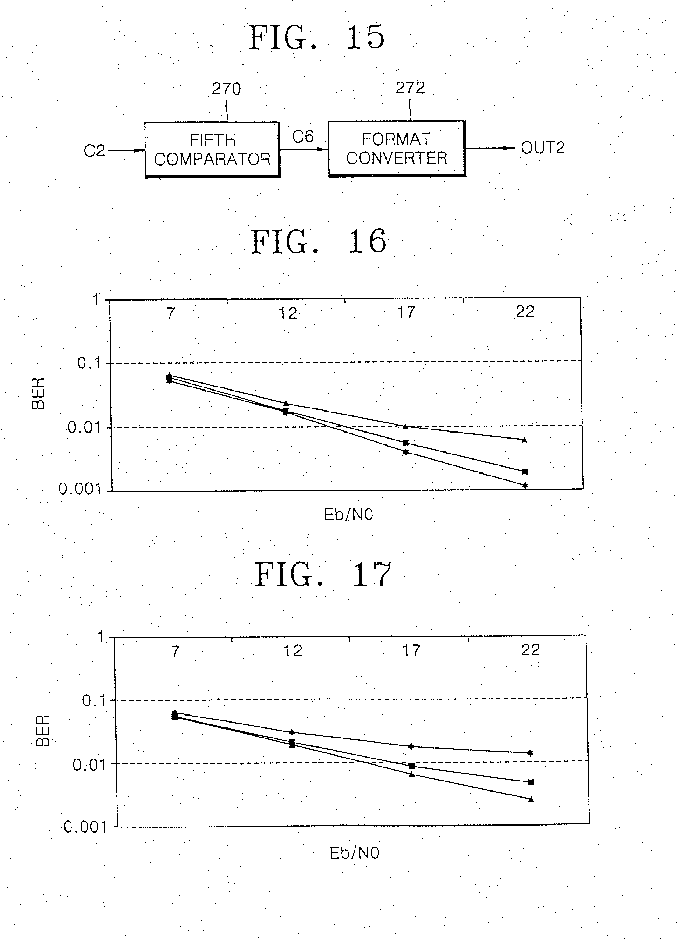

FIG. 15 is a block diagram of the first converter 234 shown in FIG. 13. The first converter 234 includes a fifth comparator 270 and a format converter 272.

The first converter 234 shown in FIG. 13 may include the fifth comparator 270 in order to perform step 110 shown in FIG. 7. In this situation, the fifth comparator 270 compares a channel change speed with a predetermined speed in response to the second control signal C2 received from the first comparator 230 and outputs the result of the comparison as a sixth control signal C6. For example, when it is recognized based on the second control signal C2 that the cell radius is greater than the first predetermined value, the fifth comparator 270 compares the channel change speed with the predetermined speed and outputs the result of the comparison as the sixth control signal C6. Here, the format converter 272 of the first converter 234 converts the format of the determined transmission symbol in response to the sixth control signal C6 received from the fifth comparator 270 and outputs the transmission symbol having the converted format through the output terminal OUT2. For example, when it is recognized based on the sixth control signal C6 received from the fifth comparator 270 that the channel change speed is not greater than the predetermined speed, the format converter 272 converts the format of the transmission symbol into the format shown in FIG. 9 in order to perform step 112. However, when it is recognized based on the sixth control signal C6 received from the fifth comparator 270 that the channel change speed is greater than the predetermined speed, the format converter 272 converts the format of the transmission symbol into the format shown in FIG. 10 or 11 in order to perform step 114.

When an OFDM communication method and apparatus adapted to channel characteristics according to the present invention are used at a whole signal bandwidth of 20 MHz, the results of operation are obtained, as shown in Table 1.

**Table 1**

| Division | First symbol | Second symbol | Third symbol | Fourth symbol | Fifth symbol |
|---|---|---|---|---|---|
| Number of carrier waves | 512 | 4096 | 1024 | 2048 | 1024 |
| Ts | 0.02844 | 0.2275 | 0.05689 | 0.1138 | 0.05689 |
| Tg | 2.81 | 22.45 | 5.6 | 11.22 | 5.6 |
| Lamp (Up) (µs) | 1 | 1 | 1 | 1 | 1 |
| CS | 1 | 1 | 1 | 1 | 1 |
| CP | 0.81 | 20.45 | 3.6 | 9.22 | 3.6 |
| Ts+Tg | 0.0313 | 0.25 | 0.0625 | 0.125 | 0.0625 |
| Bit rate | 4 Mbps | 8-50 Mbps | 4-25 Mbps | 8-50 Mbps | 8-50 Mbps |

Here, Ts denotes a period of time indicating the length of a transmission symbol, Tg denotes a guard time, the unit of the CS is in µs, and bps indicates bits per second.

As is seen from Table 1, in an OFDM communication method and apparatus according to the present invention, the length of a transmission symbol Ts is adjusted by changing the number of carrier waves so that the method and apparatus can be adapted to various communication environments. The transmission symbol is adjusted to adapt to various communication environments for the following reasons.

For example, let's assume that a Veh B channel, from Tr 101 146 v3.0, which is disclosed in a book entitled "Digital Communications", written by J. Proakis, and published by McGraw Hill in 1995, is used; the number of carrier waves is 4096; a whole signal bandwidth is 18 MHz; and a spread factor (SF) is 4.

FIG. 16 is a graph showing changes in a bit error rate (BER) with respect to changes in Doppler frequency. The vertical axis indicates a BER, and the horizontal axis indicates Eb/No where Eb is energy per bit and No is the variance of noise.

The BER at a Doppler frequency, i.e., a channel change speed, of 170 (■) is greater than the BER at a channel change speed of 17 ( 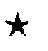 ). The BER at a channel change speed of 500 (▲) is greater than the BER at the channel change speed of 170 (■). Consequently, as is seen from FIG. 16, the BER increases with an increase in a channel change speed.

In the meantime, when the same assumption as described above is adopted, with the exception that the SF is 1, the Doppler frequency is 500, and a Veh A channel is used instead of the Veh B channel, changes in a BER with respect to changes in the number of carrier waves will be described below. Here, the channels (Veh A and Veh B) are disclosed in Table 1.2.2.3 in page 43 of a book entitled "Selection Procedures for the Choice of Radio Transmission Technologies" and published by Universal Mobile Telecommunication System (UMTS), which is under a standardization group of European Telecommunications Standardization Institute (ETSI), in Technical Report (TR) 101112 of the ETSI.

FIG. 17 is a graph showing changes in a BER with respect to changes in the number of carrier waves. The vertical axis indicates a BER, and the horizontal axis indicates Eb/No.

As shown in FIG. 17, the BER when the number of carrier waves is 2048 (■) is greater than the BER when the number of carrier waves is 1024 (▲), and the BER when the number of carrier waves is 4096 ( 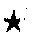 ) is greater than the BER when the number of carrier waves is 2048 (■). Consequently, as is seen from FIG. 17, when the length of a transmission symbol is decreased by decreasing the number of carrier waves from 4096 to 1096, the influence of the Doppler frequency is reduced, thereby decreasing the BER. Accordingly, if transmission data is repeated two times, as shown in FIG. 10 or 11, influence due to a change in a channel length is decreased and interchannel interference is prevented.

As described above, in an OFDM communication method and apparatus to adapt to channel characteristics according to the present invention, at least one of the length and the format of a transmission symbol and the format of a frame is changed to adapt to channel characteristics such as a channel change speed and a channel length so that communication can be accomplished at a low BER and high efficiency under various environments and a terminal can be simply implemented. In particular, under an environment in which a channel change speed is fast and a channel length is long, communication reliability can be enhanced. Since the transmission symbol includes the first symbol regardless of a cell radius, as shown in FIGS. 4 through 6, the present invention facilitates wireless resource management such as association and handover.

While the present invention has been particularly shown and described with reference to exemplary embodiments thereof, it will be understood by those of ordinary skill in the art that various changes in form and details may be therein without departing from the scope of the invention as defined by the appended claims.

## Claims

1. An orthogonal frequency division multiplexing (OFDM) communication method to adapt to channel characteristics, comprising the steps of changing at least one of a length of a transmission symbol, a format of a frame, and a format of the transmission symbol depending on a type of the transmission symbol and a radius of a cell, in which communication is performed.

2. The OFDM communication method of claim 1, wherein the changing steps comprises the following steps:
(a) determining whether the transmission symbol is a symbol that is used for a control channel;
(b) if it is determined that the transmission symbol is the symbol that is used for a control channel, determining a first symbol containing control information as the transmission symbol;
(c) if it is determined that the transmission symbol is not the symbol that is used for a control channel, determining whether the cell radius is greater than a first predetermined value;
(d) if it is determined that the cell radius is greater than the first predetermined value, determining a second symbol, which is suitable to channel characteristics where a channel change speed is slow and a channel length is long, or a third symbol, which is suitable to channel characteristics where the channel change speed is fast and the channel length is long, as the transmission symbol;
(e) if it is determined that the cell radius is not greater than the first predetermined value, determining whether the cell radius is greater than a second predetermined value;
(f) if it is determined that the cell radius is greater than the second predetermined value, determining a fourth symbol, which is suitable to channel characteristics where the channel change speed and the channel length are medium, as the transmission symbol; and
(g) if it is determined that the cell radius is not greater than the second predetermined value, determining a fifth symbol, which is suitable to channel characteristics where the channel change speed is slow and the channel length is short, as the transmission symbol,
wherein the second predetermined value is less than the first predetermined value, a length of the fourth symbol is less than a length of the second symbol, and a length of each of the first, third, and fifth symbols is less than the length of the fourth symbol.

3. The OFDM communication method of claim 2, wherein the length of each of the second, third, fourth, and fifth symbols is an integer multiple of the length of the first symbol.

4. The OFDM communication method of claim 2, wherein the length of each of the second, third, and fourth symbols is an integer multiple of the length of the fifth symbol.

5. The OFDM communication method of any one of claims 2 to 4, further comprising the step of adjusting the length of the determined transmission symbol by changing the number of carrier waves

6. The OFDM communication method of claim 2, wherein step (d) comprises determining the second or third symbol as the transmission symbol and converting the format of the frame into a macro format if it is determined that the cell radius is greater than the first predetermined value,
step (f) comprises determining the fourth symbol as the transmission symbol and converting the format of the frame into a micro format if it is determined that the cell radius is greater than the second predetermined value, and
step (g) comprises determining the fifth symbol as the transmission symbol and converting the format of the frame into a pico format if it is determined that the cell radius is not greater than the second predetermined value.

7. The OFDM communication method of claim 1, wherein changing step comprises the steps of:
(h) determining whether the radius cell is greater than a first predetermined value;
(i) if it is determined that the radius cell is greater than the first predetermined value, converting the format of the frame into a macro format;
(j) if it is determined that the radius cell is not greater than the first predetermined value, determining whether the radius cell is greater than a second predetermined value;
(k) if it is determined that the radius cell is greater than the second predetermined value, converting the format of the frame into a micro format; and
(I) if it is determined that the radius cell is not greater than the second predetermined value, converting the format of the frame into a pico format,
wherein the first predetermined value is greater than the second predetermined value.

8. The OFDM communication method of claim 7, wherein the macro format comprises: a first symbol, which contains control information;
a second symbol, which is suitable to channel characteristics where a channel change speed is slow and a channel length is long; and
a third symbol, which is suitable to channel characteristics where the channel change speed is fast and the channel length is long.

9. The OFDM communication method of claim 7 or 8, wherein the micro format comprises:
a first symbol, which contains control information; and
a fourth symbol, which is suitable to channel characteristics where a channel change speed and a channel length are medium.

10. The OFDM communication method of claim 7, 8 or 9, wherein the pico format comprises:
a first symbol, which contains control information; and
a fifth symbol, which is suitable to channel characteristics where a channel change speed is slow and a channel length is short.

11. The OFDM communication method of claim 2, wherein step (d) further comprises the steps of:
(d1) if it is determined that the cell radius is greater than the first predetermined value, determining whether the channel change speed is greater than a predetermined speed;
(d2) if it is determined that the channel change speed is not greater than the predetermined speed, determining the second symbol as the transmission symbol; and
(d3) if it is determined that the channel change speed is greater than the predetermined speed, determining the third symbol as the transmission symbol.

12. The OFDM communication method of claim 11, wherein the second symbol determined as the transmission symbol in step (d2) comprises:
a first cyclic prefix, which contains an end portion of transmission data;
a first transmission signal, which contains the transmission data; and
a first cyclic suffix, which contains a beginning portion of the transmission data.

13. The OFDM communication method of claim 11, wherein the third symbol determined as the transmission symbol in step (d3) comprises:
a first cyclic prefix, which contains a plurality of end portions of transmission data and a beginning portion of the transmission data;
a first transmission signal, which contains the transmission data;
a second transmission signal, which contains the transmission data; and
a first cyclic suffix, which contains the beginning portion of the transmission data.

14. The OFDM communication method of claim 11, wherein the third symbol comprises:
a first cyclic prefix, which contains a plurality of end portions of transmission data;
a first transmission signal, which contains the transmission data;
a second transmission signal, which contains the transmission data; and
a first cyclic suffix, which contains a plurality of beginning portions of the transmission data.

15. An orthogonal frequency division multiplexing (OFDM) communication apparatus to adapt to channel characteristics, comprising:
a symbol inspector, for inspecting a type of a transmission symbol and outputting the result of the inspection as a first control signal; and
a symbol and format converter, for changing at least one of a length of a transmission symbol, a format of a frame, and a format of the transmission symbol in response to the first control signal and a radius of a cell, in which communication is performed.

16. The OFDM communication apparatus of claim 15, wherein the symbol and format converter comprises:
a first comparator, for comparing the cell radius with a first predetermined value in response to the first control signal and outputting the result of the comparison as a second control signal;
a second comparator, for comparing the cell radius with a second predetermined value in response to the second control signal and outputting the result of the comparison as a third control signal; and
a first converter, for determining one among first, second, third, fourth, and fifth symbols as the transmission symbol in response to the first, second, and third control signals and outputting the determined symbol,
wherein the second predetermined value is less than the first predetermined value, the first symbol contains control information, the second symbol is suitable to channel characteristics where a channel change speed is slow and a channel length is long, the third symbol is suitable to channel characteristics where the channel change speed is fast and the channel length is long, the fourth symbol is suitable to channel characteristics where the channel change speed and the channel length are medium, and the fifth symbol is suitable to channel characteristics where the channel change speed is slow and the channel length is short.

17. The OFDM communication apparatus of claim 15 or 16, wherein the symbol and format converter comprises:
a third comparator, for comparing the cell radius with a first predetermined value and outputting the result of the comparison as a fourth control signal;
a fourth comparator, for comparing the cell radius with a second predetermined value in response to the fourth control signal and outputting the result of the comparison as a fifth control signal; and
a second converter, for converting the format of the frame into one of a macro format, a micro format, and a pico format in response to the fourth and fifth control signals,
wherein the first predetermined value is greater than the second predetermined value.

18. The OFDM communication apparatus of claim 16, wherein the first converter converts the format of the frame into one of a macro format, a micro format, and a pico format in response to the second and third control signals.

19. The OFDM communication apparatus of claim 16, wherein the first converter comprises a fifth comparator, for comparing the channel change speed with a predetermined speed in response to the second control signal and outputting the result of the comparison as a sixth control signal, and a format converter, for converting the format of the determined symbol in response to the sixth control signal.
